# EUROPÄISCHE PATENTANMELDUNG

(11) **EP 0 638 513 A1**
(43) Veröffentlichungstag der Anmeldung: **15.02.1995**
(21) Anmeldenummer: 94112350.7
(22) Anmeldetag: 08.08.1994
(51) Int. Cl.: B66F 11/04, F16B 7/04, F16L 37/084

(54) **Vorrichtung zur lösbaren Verbindung einer Führungsstange**

(30) Priorität: 06.08.1993 DE 4326477
(71) Anmelder: MovieTech Filmgeräte GmbH, D-81673 München (DE)
(72) Erfinder: Haberl, Karl, D-81479 München (DE); Tundo, Antonio, D-81673 München (DE)
(74) Vertreter: Popp, Eugen, Dr.

(57) **Zusammenfassung**

Die Erfindung betrifft eine Vorrichtung zur lösbaren Verbindung einer Führungsstange (32, 32', 32'') oder dergleichen zur Parallelführung zweier Aufnahmeeinrichtungen (24, 28) für mindestens eine Kamera, Gegengewichte etc., die an einem von einer Stützsäule (14) schwenkbar aufgenommenen, zweiarmigen Ausleger (16) endseitig und gelenkig angeordnet sind, mit einer weiteren Führungsstange (32, 32', 32'') oder dergleichen oder einer der beiden Aufnahmeeinrichtungen (24, 28).

Die Vorrichtung ist aus einer Anschlußmuffe (35) oder dergleichen und einem Anschlußelement (38) oder dergleichen gebildet, wobei die das Anschlußelement (38) aufnehmende Anschlußmuffe (36) ein im wesentlichen senkrecht zur Längserstreckung der Anschlußmuffe (36) verschiebbarer und in Richtung hin zu einem das Anschlußelement (36) aufnehmenden Aufnahmeraum (40) federbelastetes Arretierelement (42) oder dergleichen umfaßt, wobei das Anschlußelement (38) eine Ausnehmung (46) oder dergleichen aufweist und wobei das Arretierelement (42) der Anschlußmuffe (36) und die Ausnehmung (46) des Anschlußelements (38) miteinander formschlüssig in Eingriff bringbar sind.

## Beschreibung

Die Erfindung betrifft eine Vorrichtung zur lösbaren Verbindung einer Führungsstange o.dgl. nach dem Oberbegriff des Anspruches 1.

Derartige Vorrichtungen zur lösbaren Verbindung einer Führungsstange o.dgl. sind im Zusammenhang mit einem sogenannten Kamerakran allgemein bekannt. Eine solche Führungsstange o.dgl. dient der Parallelführung zweier Aufnahmeeinrichtungen, welche für eine Kamera, gegebenenfalls einen Sitz für einen Kameramann, Gegengewichte und ähnlichem bestimmt und an einem von einer Stützsäule des Kamerakrans schwenkbar aufgenommenen, zweiarmigen Ausleger endseitig und gelenkig angeordnet sind. Die Führungsstange ist dabei jeweils endseitig über derartige Vorrichtungen mit einer oder mehreren weiteren Führungsstangen o.dgl. im Falle einer vorgesehenen Verlängerbarkeit des Auslegers durch Umbau verbindbar oder an den beiden Aufnahmeeinrichtungen an sich befestigbar.

Als besonders nachteilig bei derartigen Vorrichtungen zur lösbaren Verbindung einer Führungsstange o.dgl. mit einer weiteren Führungsstange o.dgl. oder einer der beiden Aufnahmeeinrichtungen hat sich allerdings deren Konstruktion insgesamt erwiesen. Sämtliche derartigen Vorrichtungen nämlich legen die eine Führungsstange o.dgl. endseitig an einer weiteren Führungsstange o.dgl. oder an einer der beiden Aufnahmeeinrichtungen ausschließlich mittels Schraubverbindungen fest. Infolgedessen gestaltet sich die Handhabbarkeit derartiger Vorrichtungen zur Verbindung einer Führungsstange o.dgl. an der weiteren Führungsstange o.dgl. oder an einer der beiden Aufnahmeeinrichtungen als ausgesprochen umständlich. So ist die Montage beziehungsweise Demontage und umgekehrt einer Führungsstange o.dgl. insbesondere bei oftmaligem Umbau des Auslegers von dem Kamerakran während Dreharbeiten zu dessen Verlängerung beziehungsweise Verkürzung infolge der Schraubverbindungen verhältnismäßig aufwendig und damit einhergehend sehr zeitintensiv.

Ausgehend vom Stand der Technik liegt der Erfindung die Aufgabe zugrunde, eine Vorrichtung zur lösbaren Verbindung einer Führungsstange o.dgl. gemäß Oberbegriff des Anspruchs 1 bereitzustellen, die konstruktiv einfach ausgestaltet ist und zugleich eine einfache und wenig zeitintensive Montage beziehungsweise Demontage und umgekehrt der einen Führungsstange o.dgl. an einer weiteren Führungsstange o.dgl. oder an einer der beiden Aufnahmeeinrichtungen ermöglicht.

Diese Aufgabe wird durch die kennzeichnenden Merkmale des Anspruchs 1 gelöst.

Durch die erfindungsgemäße Ausbildung, daß nämlich eine Anschlußmuffe o.dgl. an der einen Führungsstange beziehungsweise an der weiteren Führungsstange oder der einen der beiden Aufnahmeeinrichtungen und ein Anschlußelement o.dgl. an der weiteren Führungsstange oder der einen der beiden Aufnahmeeinrichtungen beziehungsweise an der einen Führungsstange vorgesehen ist, wobei die das Anschlußelement aufnehmende Anschlußmuffe ein im wesentlichen senkrecht zur Längserstreckung der Anschlußmuffe verschiebbares und in Richtung hin zu einem das Anschlußelement aufnehmenden Aufnahmeraum federbelastetes Arretierelement o.dgl. umfaßt, wobei das Anschlußelement eine Ausnehmung o.dgl. aufweist und wobei das Arretierelement der Anschlußmuffe und die Ausnehmung des Anschlußelements miteinander formschlüssig in Eingriff bringbar sind, läßt sich eine ausgesprochen einfache Handhabbarkeit insgesamt für die Montage beziehungsweise Demontage der jeweiligen Führungsstange o.dgl. an der weiteren Führungsstange o.dgl. oder einer der beiden Aufnahmeeinrichtungen erreichen. Insbesondere führt die erfindungsgemäße Ausgestaltung zu einer Art Schnellverriegelung der Führungsstange o.dgl., die während Dreharbeiten zum Umbau eines Auslegers von einem Kamerakran bequem und beliebig oft ohne einen wesentlichen Zeitverlust verlängert beziehungsweise verkürzt und umgekehrt werden kann. Gleichzeitig ist mit der erfindungsgemäßen, besonders einfachen Konstruktion eine hohe Funktionssicherheit gewährleiset.

Vorteilhafte konstruktive Details der erfindungsgemäßen Vorrichtung sind in den Ansprüchen 2 bis 15 beschhrieben.

So umfaßt das Arretierelement der Anschlußmuffe vorzugsweise entsprechend der Merkmale nach Anspruch 2 ein etwa länglich ausgebildetes Verriegelungsteil, das im wesentlichen senkrecht zur Längserstreckung der Anschlußmuffe verschiebbar ist und in den Aufnahmeraum, der das Ansschlußelement aufnimmt, hineinragt, wobei die Wandung der Anschlußmuffe teilweise von dem etwa länglich ausgebildeten Verriegelungsteil durchgriffen wird. Auf diese Weise läßt sich eine einfache, gleichzeitig sehr funktionssichere Vorrichtung nach der Erfindung erhalten.

Weiterhin sorgen die Merkmale nach den Ansprüchen 3 bis 5 für eine besonders einfache Handhabbarkeit der erfindungsgemäßen Vorrichtung. So weist das etwa länglich ausgebildete Verriegelungsteil gemäß Anspruch 3 wenigstens eine abgeschrägte Kante auf, die sich in den Aufnahmeraum, welcher das Anschlußelement aufnimmt, hineinerstreckt. In vorteilhafter Weise ist diejenige Kante gemäß Anspruch 4 dabei abgeschrägt, welche der Öffnung des das Anschlußelement aufnehmenden Aufnahmeraums zugewandt ist, wodurch das Einbringen des Anschlußelements in den Aufnahmeraum der Anschlußmuffe erleichtert wird. Gelangt nämlich das vordere Ende des Anschlußelements mit dem Verriegelungsteil in Berührung, so wird das Verriegelungsteil aufgrund der abgeschrägten Kante bei weiterem Einbringen beziehungsweise Einschieben des Anschlußelements in den Aufnahmeraum selbsttätig von dem vorderen Ende des Anschlußelements aus dem Aufnahmeraum heraus bewegt. Vorzugsweise ist die wenigstens eine Kante nach den konstruktiven Maßnahmen des Anspruchs 5 um einen Winkel von etwa 30 bis 60°, insbesondere von 45°, abgeschrägt.

Weiterhin liegt es im Rahmen der Erfindung, entsprechend den Merkmalen des Anspruchs 6, daß das etwa länglich ausgebildete Verriegelungsteil von einem Durchbruch in der Wandung der Anschlußmuffe weitgehend spielfrei aufgenommen ist.

Von großer Bedeutung für eine vereinfachte Handhabbarkeit der erfindungsgemäßen Vorrichtung sind darüber hinaus die Merkmale nach Anspruch 7. Demnach weist das Arretierelement der Anschlußmuffe ein Betätigungsteil zum Verschieben des etwa länglich ausgebildeten Verriegelungsteils im wesentlichen senkrecht zur Längserstreckung der Anschlußmuffe aus dem das Anschlußelement aufnehmenden Aufnahmeraum heraus beziehungsweise in diesen hinein auf. Das Betätigungsteil ist dabei im wesentlichen U-förmig ausgebildet und mit dem etwa länglich ausgebildeten Verriegelungsteil die Anschlußmuffe weitgehend umgreifend verbunden.

Die Merkmale nach Anspruch 8, daß das Betätigungsteil über einen gegenüber dem Verriegelungsteil im wesentlichen diametral angeordneten, parallelen Schenkel an der Anschlußmuffe derart federbelastet abgestützt ist, daß das etwa länglich ausgebildete Verriegelungsteil in einer Stellung gehalten ist, in welcher das Verriegelungsteil in den Aufnahmeraum für das Anschlußelement hineinragt, gewährleisten eine hohe Funktionssicherheit und zudem eine leichte Handhabung der Vorrichtung insgesamt.

Besonders vorteilhaft läßt sich dies konstruktiv entsprechend den Maßnahmen nach Anspruch 9 in der Weise bewerkstelligen, daß wenigstens eine, insbesondere zwei Druckfedern vorgesehen sind, die zwischen dem zu dem Verriegelungsteil diametral angeordneten, parallelen Schenkel des Betätigungsteils und der Außenwand der Anschlußmuffe wirken.

Die Merkmale nach Anspruch 10, daß das Betätigungsteil über zwei seitliche, an dem gegenüber dem Verriegelungsteil im wesentlichen diametral angeordneten, parallelen Schenkel angebrachte Schenkel mit dem Verriegelungsteil verbunden ist, die in Ausnehmungen der Anschlußmuffe geführt sind, gewährleisten eine einfache und leichtgängige Handhabung der gesamten Vorrichtung nach der Erfindung. Demnach ist eine Verkantung des Verriegelungsteils beziehungsweise des Betätigungsteils aufgrund der zweiseitigen Führung in Ausnehmungen der Anschlußmuffe, gegebenenfalls auch in Bohrungen in der Anschlußmuffe selbst, sicher ausgeschlossen.

In weiterer Ausgestaltung der Erfindung nach Anspruch 11 läßt sich eine ausgesprochen einfache Handhabung der Vorrichtung bei deren Montage bzw. Demontage und umgekehrt erreichen, und zwar ohne zusätzliches Werkzeug. Demnach ist das Betätigungsteil, insbesondere dessen zu dem Verriegelungsteil im wesentlichen diametral angeordneter, paralleler Schenkel, mit einer vergrößerten Druckfläche o.dgl. versehen.

Weiterhin ist die Anschlußmuffe in vorteilhafter Weise entsprechend den Merkmalen nach Anspruch 12 zusätzlich mit Durchgangsbohrungen versehen, die in der Wandung angebracht sind, bis zum Aufnahmeraum für das Anschlußelement reichen und jeweils Innengewinde umfassen. Durch eine solche Ausbildung läßt sich auf einfache Weise eine zusätzliche Sicherung des Anschlußelements in der Anschlußmuffe erhalten, um einer ungewollten Lösung der Führungsstange o.dgl. von der weiteren Führungsstange o.dgl. oder einer der beiden Aufnahmeeinrichtungen infolge eines Fehlers von seiten des Bedienungspersonals entgegenzuwirken.

Stirnseitig ist die Anschlußmuffe weiterhin nach den Maßnahmen des Anspruchs 13 mit einem profilierten Vorsprung o.dgl. versehen, der in eine entsprechende, an der jeweiligen Führungsstange oder Aufnahmeeinrichtung stirnseitig angebrachte Ausnehmung zur positionsgenauen Ausrichtung der Anschlußmuffe gegenüber der jeweiligen Führungsstange oder Aufnahmmeeinrichtung einbringbar ist. Die Anschlußmuffe ließe sich sodann an der jeweiligen Führungsstange oder Aufnahmeeinrichtung auf herkömmliche Weise, zum Beispiel durch Verschweißung, befestigen.

Weiterhin liegt es im Rahmen der Erfindung, die Ausnehmung des Anschlußelements nach Anspruch 14 als Ringnut o.dgl. auszubilden. Abgesehen von einer ausgesprochen einfachen Herstellung des Anschlußelements ist hierdurch eine einfache Handhabbarkeit der gesamten Vorrichtung nach der Erfindung sichergestellt, daß das Verriegelungsteil der Anschlußmuffe in die Ausnehmung des Anschlußelements eingreifen kann, und zwar ohne das Anschlußelement gegenüber der Anschlußmuffe durch Verdrehen radial zueinander besonders auszurichten.

Schließlich wird durch die Maßnahmen nach Anspruch 15, daß das Anschlußelement stirnseitig mit einem Innengewinde oder einem Außengewinde versehen ist, welches mit einem entsprechenden, an der jeweiligen Führungsstange oder Aufnahmeeinrichtung angebrachten Außengewinde oder Innengewinde zusammenwirkt, noch eine einfache Befestigung des Anschlußelements an der jeweiligen Führungsstange oder Aufnahmeeinrichtung und damit einhergehend eine kostengünstige Herstellung erreicht.

Weitere Merkmale, Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: einen Kamerakran mit einer Ausführungsform der erfindungsgemäß ausgebildeten Vorrichtung zur lösbaren Verbindung einer Führungsstange o.dgl.;
- Fig. 2: einen mittleren Längsschnitt durch eine Ausführungsform einer erfindungsgemäß ausgebildeten Vorrichtung mit einer Anschlußmuffe und einem Anschlußelement nach Fig. 1 in vergrößerter Darstellung;
- Fig. 3: eine perspektivische Vorderansicht einer Ausführungsform der erfindungsgemäßen Anschlußmuffe nach Fig. 2 entsprechend Pfeil III in verkleinerter Darstellung;
- Fig. 4: eine perspektivische Rückansicht einer Ausführungsform der erfindungsgemäßen Anschlußmuffe nach Fig. 2 entsprechend Pfeil IV in verkleinerter Darstellung; und
- Fig. 5: eine Seitenansicht einer Ausführungsform der erfindungsgemäßen Anschlußmuffe nach Fig. 2 in verkleinerter Darstellung.

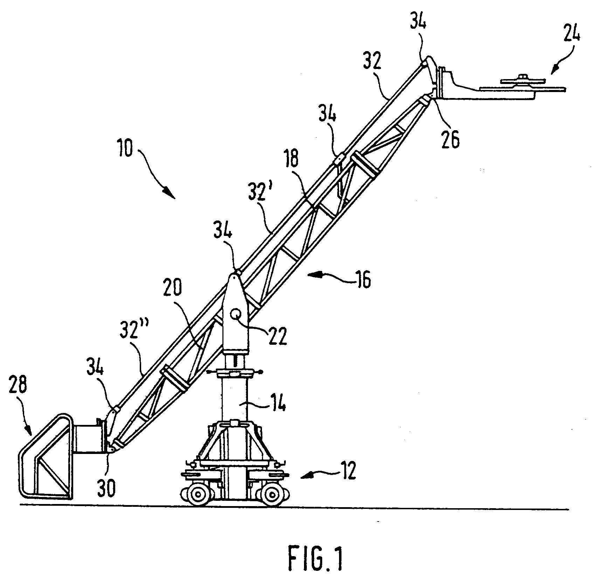

Der in Fig. 1 gezeigte Kamerakran 10 umfaßt ein Fahrgestell 12, das eine gegebenenfalls höhenverstellbare Stützsäule 14 trägt. Von der Stützsäule 14 ist ein Ausleger 16 mit zwei Armen 18, 20 über eine Schwenkachse 22 gelenkig aufgenommen.

An dem einen Arm 18 des zweiarmigen Auslegers 16 ist eine Aufnahmeeinrichtung 24 in Form einer Plattform o.dgl. zur Aufnahme einer Kamera und gegebenenfalls eines Sitzes für einen Kameramann (nicht im einzelnen dargestellt) über eine Schwenkachse 26 gelenkig angebracht. An dem anderen Arm 20 ist demgegenüber eine Aufnahmeeinrichtung 28 in Form eines Korbes o.dgl. zur Aufnahme von beispielsweise Gegengewichten oder ähnlichem über eine Schwenkachse 30 angelenkt.

Zur Parallelführung der beiden Aufnahmeeinrichtungen 24, 28, d.h. hier der Plattform und dem Korb, bei Verschwenkung des Auslegers 16 um die Schwenkachse 22, sind bei dem in Fig. 1 veranschaulichten Kamerakran insgesamt drei Führungsstangen 32, 32', 32'' vorgesehen. Die Führungsstange 32 ist dabei endseitig einerseits mit der einen der beiden Aufnahmeeinrichtungen 24 und andererseits mit der weiteren Führungsstange 32' verbunden. Die Führungsstange 32' ist endseitig einerseits mit der Führungsstange 32 und andererseits mit der wiederum weiteren Führungsstange 32'' verbunden. Die Führungsstange 32'' schließlich ist endseitig einerseits an die Führungsstange 32' und andererseits an die andere der beiden Aufnahmeinrichtungen 28 gekoppelt.

Eine solche Verbindung beziehungsweise Kopplung einer Führungsstange 32, 32', 32'' mit beziehungsweise an einer weiteren Führungsstange 32, 32', 32'' und/oder mit beziehungsweise an einer der beiden Aufnahmeeinrichtungen 24, 28 erfolgt über entsprechende Vorrichtungen 34 zur quasi Schnellverriegelung.

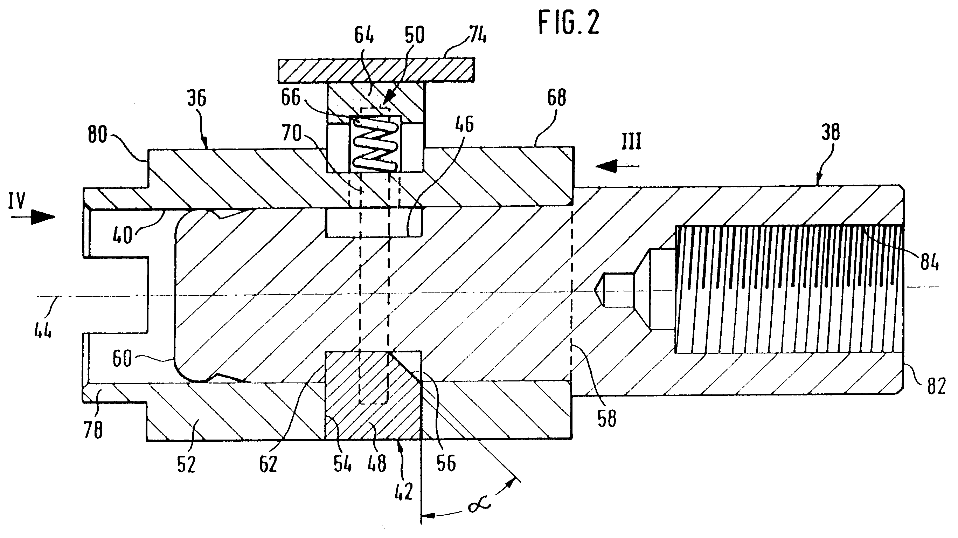

Die in den Figuren 2 bis 5 dargestellte Vorrichtung 34 nach der Erfindung weist zum einen eine Anschlußmuffe 36 o.dgl. als sogenanntes Mutterstück und ein Anschlußelement 38 o.dgl. als sogenanntes Vaterstück auf. Während die Anschlußmuffe 36 o.dgl. endseitig an der einen Führungsstange 32, 32', 32'' beziehungsweise an der weiteren Führungsstange 32, 32', 32'' oder der einen der beiden Aufnahmeeinrichtungen 24, 28 angebracht ist, ist das Anschlußelement 38 o.dgl. in darauf abgestimmter Weise an der weiteren Führungsstange 32, 32', 32'' oder der einen der beiden Aufnahmeeinrichtungen 24, 28 beziehungsweise an der einen Führungsstange 32, 32', 32'' befestigt. Die Anschlußmuffe 36 o.dgl. nimmt das Anschlußelement 38 o.dgl. zur gegenseitigen Verbindung bzw. Kopplung in einem Aufnahmeraum 40 weitgehend spielfrei auf.

Die das Anschlußelement 38 o.dgl. aufnehmende Anschlußmuffe 36 o.dgl. umfaßt nach Fig. 2 ein Arretierelement 42, das im wesentlichen senkrecht zur Längserstreckung, das heißt zur Mittellängsachse 44, der Anschlußmuffe 36 o.dgl. verschiebbar und in Richtung hin zu dem das Anschlußelement 36 o.dgl. aufnehmenden Aufnahmeraum 40 federbelastet ist.

Das Anschlußelement 38 o.dgl. weist demgegenüber eine Ausnehmung 46 o.dgl. auf, die bei der Ausführungsform der erfindungsgemäßen Vorrichtung 34 nach den Figuren 2 bis 5 als Ringnut ausgebildet ist.

Zur lösbaren Verbindung beziehungsweise Kopplung von einer Führungsstange 32, 32', 32'' mit einer weiteren Führungsstange 32, 32', 32'' und/oder einer der beiden Aufnahmeeinrichtungen 24, 28 sind das Arretierelement 42 der Anschlußmuffe 36 o.dgl. und die Ausnehmung 46 des Anschlußelements 38 o.dgl. - wie in Fig. 2 gezeigt - miteinander formschlüssig in Eingriff bringbar. Auf diese Weise läßt sich die erfindungsgemäße Vorrichtung 34, die jeweils an einem Ende einer Führungsstange 32, 32', 32'' und/oder einer der beiden Aufnahmeeinrichtungen 24, 28 angebracht ist, ausgesprochen leicht, bequem und schnell montieren beziehungsweise demontieren, das heißt die Anschlußmuffe 36 o.dgl. von dem Anschlußelement 38 o.dgl. und umgekehrt trennen.

Das Arretierelement 42 der Anschlußmuffe 36 o.dgl. umfaßt gemäß Fig. 2 ein etwa länglich ausgebildetes Verriegelungsteil 48 und ein Betätigungsteil 50 zum Verschieben des etwa länglich ausgebildeten Verriegelungsteils 48.

Das Verriegelungsteil 48 ist im wesentlichen senkrecht zur Längserstreckung, das heißt zur Mittellängsachse 44, der Anschlußmuffe 36 o.dgl., verschiebbar und ragt in den Aufnahmeraum 40 der Anschlußmuffe 36 o.dgl. hinein, in dem das Anschlußelement 38 o.dgl. aufzunehmen ist. Das Verriegelungsteil 48 erstreckt sich insoweit radial in den Aufnahmeraum 40 hinein. Dabei durchgreift das Verriegelungsteil 48 zum Teil die Wandung 52 der Anschlußmuffe 36 o.dgl. Vorzugsweise wird das etwa länglich ausgebildete Verriegelungsteil 48 von einem Durchbruch 54 in der Wandung 52 der Anschlußmuffe 36 o.dgl. weitgehend spielfrei verschiebbar aufgenommen.

Wie aus Fig. 2 deutlich hervorgeht, weist das etwa länglich ausgebildete Verriegelungsteil 48 darüber hinaus wenigstens eine abgeschrägte Kante 56 auf, die sich in den Aufnahmeraum 40, in welchem das Anschlußelement 38 o.dgl. aufzunehmen beziehungsweise bereits aufgenommen ist, hinein erstreckt. Die Kante 56 ist in diesem Zusammenhang vorteilhafterweise hin zu der Öffnung 58 des das Anschlußelement 36 o.dgl. aufnehmenden Aufnahmeraums 40, die in Fig. 2 mit einer Strichlinie angedeutet ist, zugewandt. Die wenigstens eine Kante 56 ist dabei um einen Winkel α von etwa 30° bis 60°, insbesondere von 45°, abgeschrägt. Auf diese Weise vereinfacht sich die Handhabung der Vorrichtung 34 insbesondere bei deren Montage, wenn nämlich das Anschlußelement 38 o.dgl. in den Aufnahmeraum 40 der Anschlußmuffe 36 o.dgl. eingebracht beziehungsweise eingeschoben beziehungsweise eingesteckt wird. So kann das vordere Ende 60 des Anschlußelements 38 o.dgl. das Verriegelungsteil 48 aufgrund der abgeschrägten Kante 56 durch fortgesetztes Einbringen beziehungsweise Einschieben beziehungsweise Einstecken des Anschlußelements 38 o.dgl. in den Aufnahmeraum 40 der Anschlußmuffe 36 o.dgl. radial nach außen bewegen, und zwar ohne zusätzlichen Kraftaufwand oder auch Handgriff.

Demgegenüber ist die der Öffnung 58 des das Anschlußelement 36 o.dgl. aufnehmenden Aufnahmeraums 40 abgewandte Kante 62 bei dem Ausführungsbeispiel der Vorrichtung 34 nach Fig. 2 nicht abgeschrägt. Mit anderen Worten erstreckt sich die Kante 62 des Verriegelungsteils 48 hier im wesentlichen senkrecht zur Längserstreckung, das heißt zur Mittellängsachse 44, der Anschlußmuffe 36 o.dgl. Dies hat den Vorteil, daß ein selbständiges Lösen des Anschlußelements 38 o.dgl. aus der Anschlußmuffe 36 o.dgl. ausgeschlossen ist. Zur Trennung von Anschlußelement 38 o.dgl. und Anschlußmuffe 36 o.dgl., d.h. zum Herausführen des Anschlußelements 38 o.dgl. aus dem Aufnahmeraum 40, ist daher in jedem Fall eine Betätigung des Betätigungsteils 50 etwa senkrecht zur Längserstreckung der Anschlußmuffe 36 o.dgl. notwendig, um das Verriegelungsteil 48 aus dem Aufnahmeraum 40 radial herauszubewegen und somit das Anschlußelement 38 o.dgl. freizugeben.

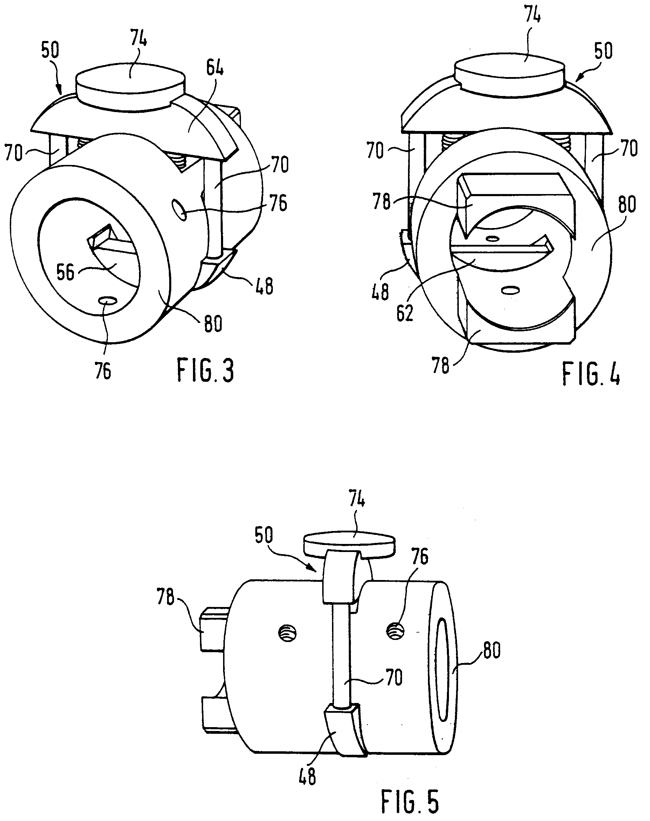

Das Betätigungsteil 50 zum Verschieben des etwa länglich ausgebildeten Verriegelungsteils 48 im wesentlichen senkrecht zur Längserstreckung, d.h. zur Mittellängsachse 44 der Anschlußmuffe 36 o.dgl., aus dem das Anschlußelement 38 o.dgl. aufnehmenden Aufnahmeraum 40 heraus beziehungsweise in diesen hinein ist entsprechend den Figuren 3 und 4 etwa U-förmig ausgebildet und mit dem etwa länglich ausgebildeten Verriegelungsteil 48 fest verbunden, zum Beispiel verschweißt. Die Anschlußmuffe 36 o.dgl. wird dabei von dem Betätigungsteil 50 weitgehend umgriffen beziehungsweise umfaßt.

Zur sicheren Halterung des Verriegelungsteils 48 des Arretierelements 42 von der Anschlußmuffe 36 o.dgl. in der Ausnehmung 46 des Anschlußelements 38 o.dgl., aber auch zur besonders einfachen Handhabbarkeit der Vorrichtung 34 insgesamt, ist das Betätigungsteil 50 über einen Schenkel 64, welcher gegenüber dem Verriegelungsteil 48 im wesentlichen diametral angeordnet ist und parallel verläuft, an der Anschlußmuffe 36 o.dgl. federbelastet abgestützt. Die Federbelastung wirkt dabei derart, daß das etwa länglich ausbildete Verriegelungsteil 48 in einer Stellung gehalten ist, in welcher das Verriegelungsteil 48 in den Aufnahmeraum 40 des Anschlußelements 38 o.dgl. hineinragt. Insbesondere sind bei dem in den Figuren 2 bis 5 dargestellten Ausführungsbeispiel der Vorrichtung 34 zu diesem Zweck zwei Druckfedern 66 vorgesehen, die sich zum einen an dem zu dem Verriegelungsteil 48 diametral angeordneten, parallelen Schenkel 64 des Betätigungsteils 50 und zum anderen an der Außenwand 68 der Anschlußmuffe 36 o.dgl. abstützen.

Wie insbesondere die Figuren 3 und 4 erkennen lassen, umfaßt das U-förmig ausgestaltete Betätigungsteil 50 zwei seitliche Schenkel 70, die den gegenüber dem Verriegelungsteil 48 im wesentlichen diametral angeordneten, parallelen Schenkel 64 und das Verriegelungsteil 48 selbst miteinander verbinden. Die beiden Schenkel 70 sind dabei in Ausnehmungen 72 der Anschlußmuffe 36 o.dgl. geführt, welche entweder an deren Außenwand 68 angebracht oder auch als Bohrungen (nicht gezeigt) in der Wandung 52 der Anschlußmuffe 36 o.dgl. ausgebildet sein können.

Zur vereinfachten Handhabung ist das Betätigungsteil 50 mit einer vergrößerten Druckfläche 74 o.dgl. ausgestattet, die insbesondere an dem Schenkel 64 vorgesehen ist, welcher zu dem Verriegelungsteil 48 im wesentichen diametral angeordnet ist und zu diesem parallel verläuft.

Gemäß Figur 5 ist die Anschlußmuffe 36 o.dgl. zusätzlich mit Durchgangsbohrungen 76 versehen, die in der Wandung 52 eingebracht sind und von der Außenwand 68 bis zum Aufnahmeraum 40 für das Anschlußelement 38 o.dgl. reichen. Die Durchgangsbohrungen 76 sind darüber hinaus mit Innengewinden zur Aufnahme von Befestigungsschrauben (nicht dargestellt) versehen. Durch solche Schrauben, die stirnseitig in den Aufnahmeraum 40 hineinragen und somit das bereits aufgenommene Anschlußelement 38 o.dgl. beaufschlagen können, läßt sich bei dem in den Figuren 2 bis 5 näher dargestellten Ausführungsbeispiel der Vorrichtung 34 nach der Erfindung eine zusätzliche Sicherung für längerfristige Installationen des Auslegearms 16 von dem Kamerakran 10 erhalten.

Die Anschlußmuffe 36 o.dgl. ist entsprechend den Figuren 2 und 4 weiterhin mit einem profilierten Vorsprung 78 an deren Stirnseite 80 versehen, welcher der Öffnung 58 des Aufnahmeraums 40 gegenüberliegt. Der Vorsprung 78 ist in eine entsprechende, an der jeweiligen Führungsstange 32, 32', 32'' oder Aufnahmeeinrichtung 24, 28 stirnseitig eingebrachte Ausnehmung (nicht dargestellt) einbringbar. Auf diese Weise kann die Anschlußmuffe 36 o.dgl. gegenüber der jeweiligen Führungsstange 32, 32', 32'' oder Aufnahmeeinrichtung 24, 28 positionsgenau ausgerichtet und nach Einbringung daran durch Verschweißung, Verschraubung etc. fixiert werden.

Zur Anbringung des Anschlußelements 38 o.dgl. am Ende einer Führungsstange 32, 32', 32'' oder einer Aufnahmeeinrichtung 24, 28 ist im Bereich von dessen hinterem Ende 82 ein Innengewinde 84 vorgesehen, das mit einem entsprechenden Außengewinde (nicht gezeigt) an der jeweiligen Führungsstange 32, 32', 32'' oder Aufnahmeeinrichtung 24, 28 zusammenwirkt. Ebensogut ist zur Befestigung des Anschlußelements 38 o.dgl. an der jeweiligen Führungsstange 32, 32', 32'' oder auch Aufnahmeeinrichtung 24, 28 im Bereich des hinteren Endes 82 des Anschlußelemens 38 o.dgl. auch ein Außengewinde denkbar, das mit einem entsprechenden Innengewinde in Wirkeingriff kommt.

Sämtliche in den Anmeldungsunterlagen offenbarten Merkmale sind als erfindungswesentlich beansprucht, soweit sie einzeln oder in Kombination gegenüber dem Stand der Technik neu sind.

## Patentansprüche

1. Vorrichtung zur lösbaren Verbindung einer Führungsstange (32, 32', 32'') oder dergleichen zur Parallelführung zweier Aufnahmeeinrichtungen (24, 28) für mindestens eine Kamera, Gegengewichte etc., die an einem von einer Stützsäule (14) schwenkbar aufgenommenen, zweiarmigen Ausleger (16) endseitig und gelenkig angeordnet sind, mit einer weiteren Führungsstange (32, 32', 32'') oder dergleichen oder einer der beiden Aufnahmeeinrichtungen (24, 28),
**gekennzeichnet** durch
eine Anschlußmuffe (36) oder dergleichen an der einen Führungsstange (32, 32', 32'') beziehungsweise an der der weiteren Führungsstange (32, 32', 32'') oder der einen der beiden Aufnahmeeinrichtungen (24, 28) und einem Anschlußelement (38) oder dergleichen an der weiteren Führungsstange (32, 32', 32'') oder der einen der beiden Aufnahmeeinrichtungen (24, 28) beziehungsweise an der einen Führungsstange (32, 32', 32''), wobei die das Anschlußelement (38) aufnehmende Anschlußmuffe (36) ein im wesentlichen senkrecht zur Längserstreckung der Anschlußmuffe (36) verschiebbares und in Richtung hin zu einem das Anschlußelement (36) aufnehmenden Aufnahmeraum (40) federbelastetes Arretierelement (42) oder dergleichen umfaßt, wobei das Anschlußelement (38) eine Ausnehmung (46) oder dergleichen aufweist und wobei das Arretierelement (42) der Anschlußmuffe (36) und die Ausnehmung (46) des Anschußelements (38) miteinander formschlüssig in Eingriff bringbar sind.

2. Vorrichtung nach Anspruch 1,
dadurch gekennzeichnet,
daß das Arretierelement (42) der Anschlußmuffe (36) ein etwa länglich ausgebildetes Verriegelungsteil (48) umfaßt, das im wesentlichen senkrecht zur Längserstreckung der Anschlußmuffe (36) verschiebbar ist und in den das Anschlußelement (38) aufnehmenden Aufnahmeraum (40) teilweise die Wandung (52) der Anschlußmuffe (36) durchgreifend hineinragt.

3. Vorrichtung nach Anspruch 2,
dadurch gekennzeichnet,
daß das etwa länglich ausgebildete Verriegelungsteil (48) wenigstens eine sich in den das Anschlußelement (38) aufnehmenden Aufnahmeraum (40) hineinerstreckende abgeschrägte Kante (56) aufweist.

4. Vorrichtung nach Anspruch 3,
dadurch gekennzeichnet,
daß die der Öffnung (58) des das Anschlußelement (36) aufnehmenden Aufnahmeraums (40) zugewandte Kante (56) abgeschrägt ist.

5. Vorrichtung nach Anspruch 3 und/oder 4,
dadurch gekennzeichnet,
daß die wenigstens eine Kante (56) um einen Winkel (α) von etwa 30° bis 60°, insbesondere von 45°, abgeschrägt ist.

6. Vorrichtung nach einem der Ansprüche 2 bis 5,
dadurch gekennzeichnet,
daß das etwa länglich ausgebildete Verriegelungsteil (48) von einem Durchbruch (54) in der Wandung (52) der Anschlußmuffe (36) weitgehend spielfrei verschiebbar aufgenommen ist.

7. Vorrichtung nach einem der Ansprüche 1 bis 6,
dadurch gekennzeichnet,
das das Arretierelement (42) der Anschlußmuffe (36) ein Betätigungsteil (50) zum Verschieben des etwa länglich ausgebildeten Verriegelungsteils (48) im wesentlichen senkrecht zur Längserstreckung der Anschlußmuffe (36) aus dem das Anschlußelement (38) aufnehmenden Aufnahmeraum (38) heraus beziehungsweise in diesen hinein aufweist, das im wesentlichen U-förmig ausgebildet und mit dem etwa länglich ausgebildeten Verriegelungsteil (48) die Anschlußmuffe (36) weitgehend umgreifend verbunden ist.

8. Vorrichtung nach Anspruch 7,
dadurch gekennzeichnet,
daß das Betätigungsteil (50) über einen gegenüber dem Verriegelungsteil (48) im wesentlichen diametral angeordneten, parallelen Schenkel (64) an der Anschlußmuffe (36) derart federbelastet abgestützt ist, daß das etwa länglich ausgebildete Verriegelungsteil (48) in einer Stellung gehalten ist, in welcher das Verriegelungsteil (48) in den Aufnahmeraum (40) für das Anschlußelement (38) hineinragt.

9. Vorrichtung anch Anspruch 8,
dadurch gekennzeichnet,
daß wenigstens eine, vorzugsweise zwei Druckfedern (66) zwischen dem zu dem Verriegelungsteil (48) diametral angeordneten, parallelen Schenkel (64) des Betätigungsteils (50) und der Außenwand (68) der Anschlußmuffe (36) vorgesehen sind.

10. Vorrichtung nach einem der Ansprüche 7 bis 9,
dadurch gekennzeichnet,
daß das Betätigungsteil (50) über zwei seitiche, an dem gegenüber dem Verriegelungsteil (48) im wesentlichen diametral angeordneten, parallelen Schenkel (64) angebrachte Schenkel (70) mit dem Verriegelungsteil (48) verbunden ist, die in Ausnehmungen (72) der Anschlußmuffe (36) geführt sind.

11. Vorrichtung nach einem der Ansprüche 8 bis 10,
dadurch gekennzeichnet,
daß das Betätigungsteil (50), insbesondere dessen zu dem Verriegelungsteil (48) im wesentlichen diametral angeordneter, paralleler Schenkel (64), mit einer vergrößerten Druckfläche (74) oder dergleichen versehen ist.

12. Vorrichtung nach wenigstens einem der Ansprüche 1 bis 11,
dadurch gekennzeichnet,
daß die Anschlußmuffe (36) zusätzlich mit in der Wandung (52) eingebrachten, bis zum Aufnahmeraum (40) für das Anschlußelement (38) reichenden Durchgangsbohrungen (76) mit Innengewinden versehen ist.

13. Vorrichtung nach wenigstens einem der Ansprüche 1 bis 12,
dadurch gekennzeichnet,
daß die Anschlußmuffe (36) stirnseitig mit einem profilierten Vorsprung (78) oder dergleichen versehen ist, der in eine entsprechende, an der jeweiligen Führungsstange (32, 32', 32'') oder Aufnahmeeinrichtung (24, 28) stirnseitig eingebrachte Ausnehmung zur positionsgenauen Ausrichtung der Anschlußmuffe (36) gegenüber der jeweiligen Führungsstange (32, 32', 32'') oder Aufnahmeeinrichtung (24, 28) einbringbar ist.

14. Vorrichtung nach wenigstens einem der Ansprüche 1 bis 13,
dadurch gekennzeichnet,
daß die Ausnehmung (46) des Anschlußelements (38) als Ringnut oder dergleichen ausgebildet ist.

15. Vorrichtung nach einem der Ansprüche 1 bis 14,
dadurch gekennzeichnet, daß das Anschlußelement (38) stirnseitig mit einem Innengewinde (84) oder einem Außengewinde versehen ist, das mit einem entsprechenden an der jeweiligen Führungsstange (32, 32', 32'') oder Aufnahmeeinrichtung (24, 28) angebrachte Außengewinde oder Innengewinde zur Befestigung des Anschlußelements an der jeweiligen Führungsstange (32, 32', 32'') oder Aufnahmeeinrichtung (24, 28) zusammenwirkt.
